# EUROPÄISCHE PATENTSCHRIFT

(11) **EP 1 070 623 B1**
(45) Veröffentlichungstag und Bekanntmachung des Hinweises auf die Patenterteilung: **13.04.2005**
(21) Anmeldenummer: 00111450.3
(22) Anmeldetag: 27.05.2000
(51) Int. Cl.: B60K 28/16

(54) **Verfahren zur Antriebsschlupfregelung**
Method for anti-skid control
Méthode de régulation antipatinage

(30) Priorität: 22.07.1999 DE 19934376
(43) Veröffentlichungstag der Anmeldung: 24.01.2001
(73) Patentinhaber: WABCO GmbH & CO. OHG, 30453 Hannover (DE)
(72) Erfinder: Lenz, Thomas, 31257 Lehrte (DE); Möllenhoff, Jörg, 30455 Hannover (DE); Struwe, Otmar, 30952 Ronnenberg (DE)
(74) Vertreter: Schrödter, Manfred

(56) Entgegenhaltungen:
- DE-A- 4 121 747
- DE-A- 4 122 345
- DE-A- 19 603 677

## Beschreibung

Die Erfindung bezieht sich auf ein Verfahren zur Regelung des Antriebsschlupfes bei einem Fahrzeug mit Hinterradantrieb gemäß dem Oberbegriff des Patentanspruchs 1.

Heutige Fahrzeuge sind zu einem großen Teil mit einem Antiblockiersystem (ABS) sowie mit einer Antriebsschlupfregelung (ASR) ausgerustet. Das ABS/ASR kann dabei Teil einer konventionellen Bremsanlage oder aber auch Teil eines elektronischen Bremssystems (EBS) sein.

ABS/ASR-Systeme haben die Aufgabe, beim Bremsen oder beim Anfahren des Fahrzeugs ein Blockieren bzw. Durchdrehen der Räder zu verhindern, und hierzu den jeweiligen Schlupf der Räder (beim ASR nur der Antriebsräder) auf einen optimalen Sollwert einzuregeln. Dieser kann z. B. bei etwa 10 Prozent liegen. Hierzu werden die Raddrehzahlen des Fahrzeugs mit Drehzahlsensoren erfaßt, diese Werte einer Elektronik zugeführt und dort mit Hilfe von entsprechend programmierten Mikroprozessoren verarbeitet. Das System gibt Ausgangssignale ab, die Magnetventilen zugeführt werden, um diejenigen Räder, die zum Blockieren oder zum Durchdrehen neigen, zu beeinflussen.

Ein bekanntes ASR-System bremst dasjenige Antriebsrad, welches durchdreht, ab. Hierdurch wird über das Achs-Differential ein Drehmoment zum anderen Rad übertragen. Sollten jedoch beide Antriebsräder durchdrehen, wird in die Motorsteuerung eingegriffen und zusätzlich die Motordrehzahl bzw. -leistung gegen die Vorgabe des Fahrers herabgesetzt. Eine genauere Beschreibung eines solchen bekannten ABS/ASR-Systems ist beispielsweise im WABCO-Prospekt "Das integrierte Sicherheitssystem für Nutzfahrzeuge, Anti-Blockier-System ABS mit Antriebs-Schlupf-Regelung ASR", März 1987, 5 - 5.3, enthalten.

Ein für Antriebsschlupfregelsysteme (ASR) besonders schwieriger Betriebszustand ist das Anfahren und Weiterfahren in schwerem Gelände, wie z. B. Tiefschnee oder Matsch. Dabei kann es vorkommen, daß die herabgesetzte Motorleistung nicht mehr ausreicht, das Fahrzeug anzutreiben.

Es ist denkbar, bei solchen Zuständen den ASR-Sollwert, also den Schlupf der Antriebsräder, durch Betätigen eines Tasters zu erhöhen ("ASR-Taster")

Weiter ist hierzu bereits bekannt (gattungsbildende DE-A1 196 03 677), den Antriebsschlupf-Sollwert automatisch an verschiedene Fahrbahnzustände und Kraftschlußbeiwerte anzupassen. Insbesondere soll dabei auf schlechten Straßen der ASR-Sollwert erhöht werden, weil dadurch die Beschleunigung des Fahrzeugs erhöht werden kann.

Bei dem bekannten Verfahren wird der ASR-Sollwert beim Auftreten von typischen Schwingungen der Radgeschwindigkeiten (Raddynamik) der Räder der Antriebsachse erhöht. Hierzu ist eine Funktion vorgesehen, die hochfrequente Schwingungen mit kleiner Amplitude erkennt, wobei die Radbeschleunigungen der Antriebsräder ausgewertet werden. Ein Hinweis auf die obengenannten extremen Fahrbahnbedingungen findet sich hier aber nicht. Mit dem bekannten Verfahren kann der ASR-Sollwert z. B. zwischen ca. 5 % bis 20 % variiert werden, wobei die hohen Werte zu schlechten Straßenoberflächen gehören.

Nachteilig an der o. g. bekannten Lösung ist, daß die erwähnten hochfrequenten Schwingungen der Antriebsräder, insbesondere bei Fahrzeugen mit hoher Eigendynamik der Antriebsachse, wie z. B. bei Fahrzeugen mit Steckachsen, unter Umständen auch von selbst auftreten können und damit der ASR-Sollwert ungünstig beeinflußt werden kann.

Aus der DE-A1 41 21 747 ist schließlich bekannt, eine Antriebs-Schlupf-Regelung für ein Motorfahrzeug vorzusehen, bei welchem ein Soll-Schlupfverhältnis durch Steuerung der Drosselklappe des Motors eingestellt werden kann. Hierdurch kann das Drehmoment der Antriebsräder des Fahrzeugs geregelt werden. Der Eingriff in die Motorregelung geschieht dabei so, daß bei schlechter Straße eine langsame Änderung des Soll-Schlupfes vorgenommen wird, während bei guter Straße eine schnelle Änderung erfolgt. Zur Erkennung einer guten bzw. schlechten Straße wird beispielsweise die Radgeschwindigkeit eines Rades an der Vorderachse oder der Hinterachse durch Radsensoren erfaßt. Wenn die durch Differenzierung der Radgeschwindigkeit gebildete Radbeschleunigung stark schwankt, wird auf eine schlechte Straße geschlossen.

Der Erfindung liegt die Aufgabe zugrunde, ein Verfahren zur Verbesserung der Traktion eines Fahrzeugs bei Fahrten im Tiefschnee und anderen schweren Geländearten anzugeben.

Diese Aufgabe wird durch die im Patentanspruch 1 enthaltene Erfindung gelöst. Die Unteransprüche enthalten zweckmäßige Weiterbildungen.

Durch die erfindungsgemäßen Maßnahmen erreicht man eine zuverlässige Anhebung des Antriebsschlupf-Sollwertes bei Fahrten durch Tiefschnee oder schweres Gelände, und zwar unabhängig vom Fahrzeug- und Achsentyp sowie vom Beladungszustand. Sobald die genannten schwierigen Geländearten nicht mehr vorliegen, wird der ASR-Sollwert automatisch wieder auf den normalen Wert herabgesetzt. Wie Versuchsfahrten ergeben haben, wird durch den erhöhten ASR-Schlupf der Antriebsräder bei den genannten schwierigen Fahrbedingungen sowohl die Traktion als auch die zur Verfügung stehende Motorleistung ausreichend erhöht.

Durch die erfindungsgemäße selbständige Erkennung der Fahrbahnverhältnisse und die entsprechende Anpassung der ASR-Regelung ist ein zusätzlicher Regeleingriff durch den Fahrer, beispielsweise durch Betätigung eines ASR-Tasters, im allgemeinen überflüssig. Durch das erfindungsgemäße Verfahren kann eine verbesserte Fahrzeugstabilität erreicht und aufrechterhalten werden.

Zur Erkennung der obengenannten schwierigen Geländearten wird gemäß der Erfindung die Raddynamik der Räder, und zwar nicht der Hinterachse wie beim Stand der Technik, sondern der Vorderachse beobachtet. Wie sich durch genaue Auswertung der Vorderradbeschleunigungen bei Versuchsfahrten gezeigt hat, ergibt sich insbesondere bei Fahrten durch Tiefschnee (Schneehöhe >10 cm) eine erhöhte Raddynamik der Vorderräder. Dies ist so zu erklären, daß sich bei Tiefschneefahrten wiederholt kurzzeitig Schneekeile vor den Vorderrädern aufbauen, welche anschließend zusammengedrückt und überfahren werden. Dies ist die Ursache für die obengenannte erhöhte Raddynamik, welche als Kriterium für die erfindungsgemäße Sollschlupferhöhung verwendet wird.

Die Erfindung wird im folgenden bei einem Ausführungsbeispiel anhand einer Zeichnung naher erläutert.

Diese zeigt in
- Fig. 1: ein Fahrzeug bei einer Fahrt im Tiefschnee, in
- Fig. 2: ein Blockschaltbild des erfindungsgemäßen ABS/ASR-Systems, und in
- Fig. 3: ein Flußdiagramm für das erfindungsgemäße Verfahren.

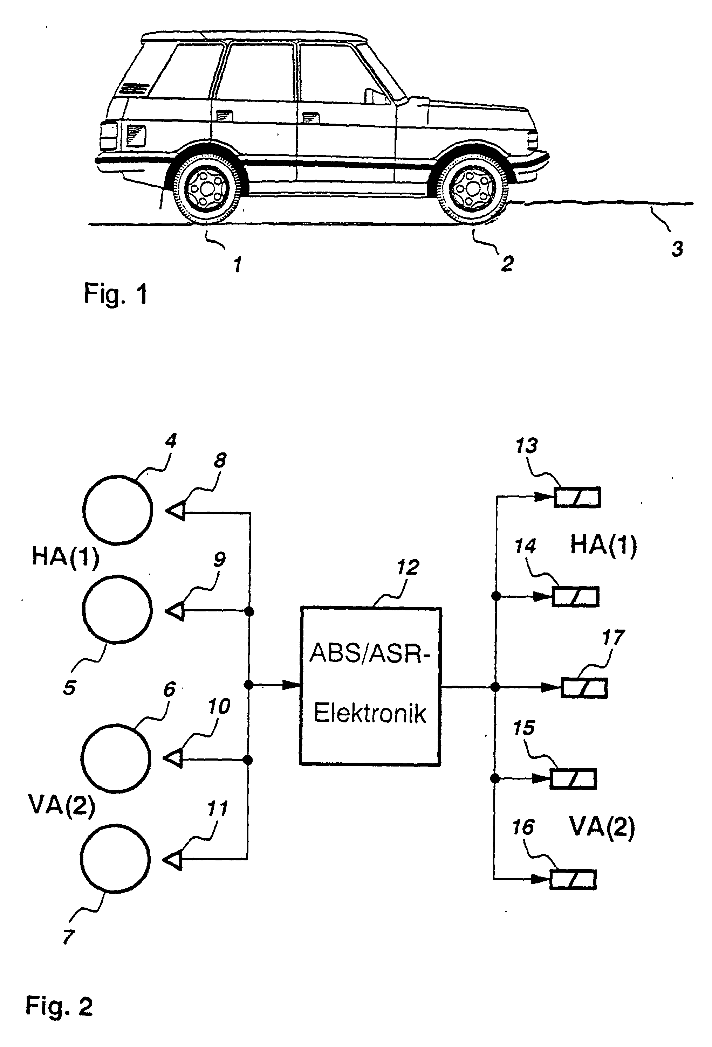

Gemäß Fig. 1 befindet sich ein Fahrzeug mit angetriebener Hinterachse (1) sowie nicht angetriebener Vorderachse (2) auf einer Fahrt durch Tiefschnee. Die Schneehöhe (3) beträgt etwa 20 cm. Der Schnee möge bereits verfestigt sein. Bei diesem Fahrzustand kann es leicht vorkommen, insbesondere bei einer Steigung, daß die Räder der Hinterachse (1) zum Durchdrehen neigen, und deshalb das im Fahrzeug eingebaute ASR-System durch Bremsung des durchdrehenden Rades bzw. durch Herabsetzung der Motorleistung in Aktion tritt.

Das genannte ABS/ASR-System ist in der Fig. 2 als Blockschaltbild schematisch dargestellt. Die Drehzahlen der Räder (4, 5) der Hinterachse (1) werden mittels Drehzahl-Sensoren (8, 9) abgefühlt. Entsprechend werden die Räder (6, 7) der Vorderachse (2) mittels Drehzahlsensoren (10, 11) abgefühlt. Die Drehzahlsignale aller vier Räder werden der ABS/ASR-Elektronik (12) zugeführt. Da der grundsätzliche Aufbau derartiger Elektroniken dem Fachmann bekannt ist, wird auf den inneren Aufbau der Elektronik (12) nicht näher eingegangen (siehe z. B. den obengenannten WABCO-Prospekt).

Die Drehzahlinformationen der vier Räder werden innerhalb der Elektronik (12) zu Ansteuersignalen für Magnetventile (13 bis 16) verarbeitet. Diese Ventile sind in die Bremsleitungen der einzelnen Räder eingesetzt und dienen dazu, die Bremswirkung entweder herabzusetzen (bei ABS-Betrieb) oder Bremskräfte auf einzelne durchdrehenden Hinterräder aufzubringen (bei ASR-Betrieb).

Beim hier behandelten ASR-Betrieb wird der Bremszlinder des zum Durchdrehen neigenden Rades (4 oder 5) der Hinterachse (1) bzw. der Antriebsachse mit Bremsdruck beaufschlagt und dieses Rad somit verlangsamt. Der Schlupf des durchdrehenden Rades wird dann durch die ASR-Elektronik auf einen von der Straßenbeschaffenheit abhängenden Sollwert eingeregelt. Über das Differentialgetriebe der Hinterachse wird in bekannter Weise so ein erhöhtes Drehmoment auf das nicht durchdrehende Antriebsrad übergeleitet.

Falls das durchdrehende Rad eine Drehzahlgrenze übertrifft oder beide Antriebsräder durchdrehen, wird über ein Betätigungsglied (17), welches am Gas-Gestänge angreift, die Motorleistung entgegen der Fahrer-Vorgabe herabgesetzt.

Gemäß der Erfindung hat nun die ABS/ASR-Elektronik (12) einen zusätzlichen Schaltungsteil bzw. einen zusätzlichen Programmteil der enthaltenen Mikroprozessoren, welcher bewirkt, daß zusätzlich die Raddynamik der Räder (6, 7) der Vorderachse (2) untersucht wird. Dies erfolgt zweckmäßig dadurch, daß die Vorderrad-Beschleunigungen ausgewertet werden. Wenn die Differenz der beiden Vorderradbeschleunigungen zueinander einen Grenzwert überschreitet, wird gemäß der Erfindung innerhalb der Elektronik (12) der normale Antriebsschlupf-Sollwert heraufgesetzt. Der heraufgesetzte ASR-Sollwert kann je nach Fahrzeuggeschwindigkeit bis zu 50 % über dem normalen Wert liegen. Hierdurch wird, wie oben beschrieben, ein sicheres Fahren bei erhöhter Motorleistung im Tiefschnee oder anderen schwierigen Geländearten ermöglicht.

Gemäß einer Weiterbildung der Erfindung wird die beschriebene Anhebung nur dann durchgeführt, wenn an den Antriebsrädern (4, 5) der Hinterachse (1) keine hochdynamischen Torsions-Schwingungen mit einer typischen Frequenz von 5 - 8 Hz auftreten. Diese werden dadurch erkannt, daß die mittleren Radbeschleunigungen der Räder der Hinterachse einen Grenzwert überschreiten. Wie sich nämlich gezeigt hat, können sich solche Schwingungen der Antriebsräder auf die Vorderräder übertragen und dadurch die erfindungsgemäße Erfassung der Raddynamik der Vorderräder verfälschen. Hierdurch wird eine unnötige Änderung des Antriebsschlupf-Sollwertes vermieden.

Zweckmäßig ist weiter, die erfindungsgemäße Anhebung des Antriebsschlupf-Sollwertes nur dann vorzunehmen, wenn sich das Fahrzeug nicht in einer Kurvenfahrt befindet. Durch diese Maßnahme wird die Fahrstabilität erhöht. Es wird also in diesem Fall der Fahrstabilität gegenüber der Traktion der Vorzug gegeben. Eine Kurvenfahrt läßt sich z. B. durch Vergleich der Radgeschwindigkeiten erkennen.

Zweckmäßig ist weiter, daß die erfindungsgemäße Anhebung des Antriebsschlupf-Sollwertes in Abhängigkeit von der Fahrzeuggeschwindigkeit begrenzt wird. Diese Maßnahme dient ebenfalls der Fahrstabilität und Fahrsicherheit.

Schließlich kann der Gradient, mit dem der ASR-Sollwert erhöht wird, in Abhängigkeit von verschiedenen Kriterien veränderbar sein. Diese Kriterien können z. B. die aktuelle Fahrzeuggeschwindigkeit, die Fahrzeugbeschleunigung oder die Stellung des Fahrpedals sein.

Durch eine solche Erhöhung des Gradienten kann im Bedarfsfall die Traktion noch schneller verbessert werden.

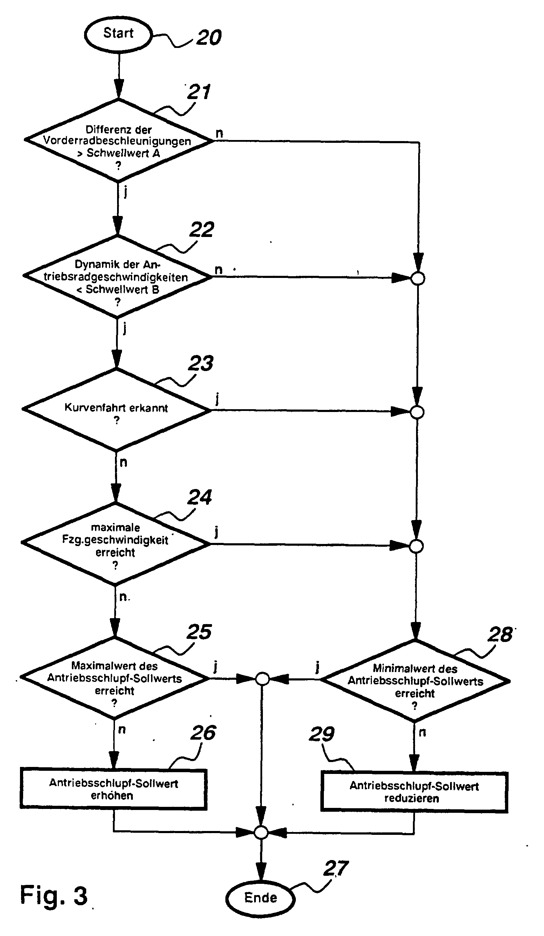

In der Fig. 3 ist das erfindungsgemäße Verfahren zur Regelung des Antriebsschlupfes als Flußdiagramm dargestellt. Dieses wird von in der ABS-ASR-Elektronik (12) enthaltenen Mikrocontrollern als Zusatzprogramm zyklisch abgearbeitet, solange das Fahrzeug'im ASR-Betrieb fährt.

Nach dem Start (20) des Unterprogramms wird in einem Verzweigungsblock (21) geprüft, ob die Differenz der Vorderradbeschleunigungen größer als ein Sollwert (A) ist.

Falls dies der Fall ist, wird in einem weiteren Verzweigungsblock (22) geprüft, ob die Dynamik der Antriebsradgeschwindigkeiten kleiner als ein Schwellwert (B) ist.

Falls dies der Fall ist, wird im nächsten Verzweigungsblock (23) geprüft, ob keine Kurvenfahrt vorliegt.

Falls dies bejaht wird, wird in einem weiteren Verzweigungsblock (24) geprüft, ob die maximale Fahrzeuggeschwindigkeit noch nicht erreicht ist.

Falls dies bejaht wird, wird in einem weiteren Verzweigungsblock (25) geprüft, ob ein zulässiger Maximalwert des Antriebsschlupf-Sollwertes noch nicht erreicht ist.

Falls dies der Fall ist, wird in einem Datentransferblock (26) erfindungsgemäß der Antriebsschlupf-Sollwert erhöht. Anschließend endet das Programm (27).

Falls das Ergebnis einer der Verzweigungsblöcke (21 bis 24) ein "Nein" ist, wird in einem Verzweigungsblock (28) geprüft, ob der Minimalwert des Antriebsschlupf-Sollwertes noch nicht erreicht ist.

Falls dies bejaht wird, wird in einem Datentransferblock (29) der Antriebsschlupf-Sollwert reduziert. Anschließend wird das Programm beendet (27).

Falls das Ergebnis der Verzweigungsblöcke (25) oder (28) negativ ist, wird ebenfalls das Programm beendet (27).

Das erfindungsgemäße Verfahren ist natürlich auch bei einem Fahrzeug mit Allradantrieb anwendbar, bei dem der Vorderradantrieb abschaltbar ist, sofern und solange dies der Fall ist.

## Patentansprüche

1. Verfahren zur Regelung des Antriebsschlupfes (ASR) für ein Fahrzeug, wobei ein Antriebsschlupf-Sollwert berechnet wird, der auf die aktuelle Straßenoberfläche abgestimmt ist,
**gekennzeichnet durch** folgende Merkmale:
Räder (4, 5) an Hinterachse (1) des Fahrzeugs werden angetrieben und Räder (6, 7) an einer Vorderachse (2) des Fahrzeugs werden nicht angetrieben;
der Antriebsschlupf-Sollwert der Räder (4, 5) der Hinterachse (1) wird angehoben, solange die Vorderrad-Beschleunigungen oder die Differenz der Vorderrad-Beschleunigungen einen Grenzwert überschreiten;
die Anhebung erfolgt nur dann, wenn an den Antriebsrädern (4, 5) keine hochdynamischen Schwingungen auftreten.

2. Verfahren zur Regelung des Antriebsschlupfes (ASR) für ein Fahrzeug, wobei ein Antriebsschlupf-Sollwert berechnet wird, der auf die aktuelle Straßenoberfläche abgestimmt ist,
**gekennzeichnet durch** folgende Merkmale;
Räder (4, 5) an einer Hinterachse (1) des Fahrzeugs werden angetrieben und Räder (6, 7) an einer Vorderachse (2) des Fahrzeugs werden nicht angetrieben;
der Antriebsschlupf-Sollwert der Räder (4, 5) der Hinterachse (1) wird angehoben, solange die Vorderrad-Beschleunigungen oder die Differenz der Vorderrad-Beschleunigungen einen Grenzwert überschreiten;
die Anhebung erfolgt nur dann, wenn sich das Fahrzeug nicht in einer Kurvenfahrt befindet.

3. Verfahren nach Anspruch 1 oder 2, **dadurch gekennzeichnet, daß** die Anhebung in Abhängigkeit von der Fahrzeuggeschwindigkeit begrenzt wird.

4. Verfahren nach einem oder mehreren der Ansprüche 1 bis 3, **dadurch gekennzeichnet, daß** der Gradient, mit dem der ASR-Sollwert erhöht wird, in Abhängigkeit von bestimmten Kriterien, wie aktuelle Fahrzeuggeschwindigkeit, Fahrzeugbeschleunigung und Fahrpedalstellung, veränderbar ist.

## Claims

1. Method of regulating the drive slip (ASR) for a vehicle, there being calculated a desired value for drive slip which is matched to the current road surface,
**characterised by** the following features:
wheels (4, 5) on a rear axle (1) of the vehicle are driven and wheels (6, 7) on a front axle (2) of the vehicle are not driven;
the desired value for drive slip of the wheels (4, 5) of the rear axle (1) is increased as long as the front wheel accelerations or the difference between the front wheel accelerations exceed(s) a threshold value;
the increase is effected only when no highly dynamic oscillations occur at the drive wheels (4, 5).

2. Method of regulating the drive slip (ASR) for a vehicle, there being calculated a desired value for drive slip which is matched to the current road surface,
**characterised by** the following features:
wheels (4, 5) on a rear axle (1) of the vehicle are driven and wheels (6, 7) on a front axle (2) of the vehicle are not driven;
the desired value for drive slip of the wheels (4, 5) of the rear axle (1) is increased as long as the front wheel accelerations or the difference between the front wheel accelerations exceed(s) a threshold value;
the increase is effected only when the vehicle is not negotiating a curve.

3. Method according to claim 1 or 2, **characterised in that** the increase is limited in dependence upon the vehicle speed.

4. Method according to one or more of claims 1 to 3, **characterised in that** the gradient with which the ASR desired value is increased is variable in dependence upon particular criteria, such as current vehicle speed, vehicle acceleration and accelerator pedal position.

## Revendications

1. Procédé de régulation d'antipatinage (ASR) pour un véhicule, dans lequel une valeur de consigne d'antipatinage est calculée, qui est déterminée à partir de la surface de la route actuelle, **caractérisé en ce que**
les roues (4, 5) d'un essieu arrière (1) du véhicule sont entraînées et les roues (6, 7) d'un essieu avant (2) du véhicule ne sont pas entraînées ;
la valeur de consigne d'antipatinage des roues (4, 5) de l'essieu arrière (1) est augmentée, tant que les accélérations des roues avant ou la différence des accélérations des roues avant dépassent une valeur limite ;
l'augmentation ne se produit que lorsqu'aucune oscillation hautement dynamique n'apparaît sur les roues motrices (4, 5).

2. Procédé de régulation d'antipatinage (ASR) pour un véhicule, dans lequel la valeur de consigne d'antipatinage est calculée, qui est déterminée à partir de la surface de la route actuelle, **caractérisé en ce que**
les roues (4, 5) sur un essieu arrière (1) du véhicule sont entraînées et les roues (6, 7) sur un essieu avant (2) du véhicule ne sont pas entraînées ;
la valeur de consigne d'antipatinage des roues (4, 5) de l'essieu arrière (1) est augmentée, tant que les accélérations des roues avant ou la différence des accélérations des roues avant dépassent une valeur limite ;
l'augmentation ne se produit que lorsque le véhicule n'effectue pas un trajet courbe.

3. Procédé selon la revendication 1 ou 2, **caractérisé en ce que** l'augmentation est limitée en fonction de la vitesse du véhicule.

4. Procédé selon l'une ou plusieurs des revendications 1 à 3, **caractérisé en ce que** le gradient, par lequel la valeur de consigne d'ASR est augmentée, est modifiable en fonction de critères déterminés, comme la vitesse du véhicule actuelle, l'accélération du véhicule et la position de la pédale d'accélérateur.
